# EUROPEAN PATENT SPECIFICATION

(11) **EP 3 657 585 B1**
(45) Date of publication and mention of the grant of the patent: **30.12.2020**
(21) Application number: 19157527.3
(22) Date of filing: 15.02.2019
(51) Int. Cl.: H01M 10/04, B29C 65/00, B21D 22/00, B21D 24/00

(54) **POUCH FORMING DEVICE AND METHOD AND FACILITY FOR PRODUCING SECONDARY BATTERY COMPRISING THE POUCH FORMING DEVICE**
BEUTELHERSTELLUNGSVORRICHTUNG UND VERFAHREN UND ANLAGE ZUR HERSTELLUNG EINER SEKUNDÄRBATTERIE MIT DER BEUTELHERSTELLUNGSVORRICHTUNG
DISPOSITIF DE FORMATION DE SACHET ET PROCÉDÉ ET INSTALLATION DE PRODUCTION DE BATTERIE SECONDAIRE COMPRENANT LE DISPOSITIF DE FORMATION DE SACHET

(30) Priority: 23.11.2018 KR 20180146357
(43) Date of publication of application: 27.05.2020
(73) Proprietor: LG CHEM, LTD., Yeongdeungpo-gu, Seoul 07336 (KR)
(72) Inventor: KIM, Gee Hwan, 34122 DAEJEON (KR); LEE, Sang Don, 34122 DAEJEON (KR); CHOI, Min Seung, 34122 DAEJEON (KR); YEO, Sang Uk, 34122 DAEJEON (KR)
(74) Representative: Plasseraud IP

(56) References cited:
- WO-A1-2016/006403
- JP-A- H11 239 999
- JP-A- 2014 083 573

## Description

### CROSS-REFERENCE TO RELATED APPLICATIONS

The present application claims the benefit of the priority of Korean Patent Application No. 10-2018-0146357, filed on November 23, 2018.

### BACKGROUND OF THE INVENTION

### Field of the Invention

The present invention relates to a pouch forming device and method and a facility for producing a secondary battery, which comprises the pouch forming device, and more particularly, to a pouch forming device and method, in which, when a pouch is formed, an elongation gradually increases to prevent cracks from occurring, and a facility for producing a secondary battery, which comprises the pouch forming device.

### Description of the Related Art

In general, secondary batteries are chargeable and dischargeable unlike primary batteries that are not chargeable and are widely used in electronic devices such as mobile phones, notebook computers, camcorders, and the like, electric vehicles, or the like.

Such a secondary battery comprises an electrode assembly comprising an electrode tab, an electrode lead coupled to the electrode tab, and a battery case accommodating the electrode assembly in a state in which a front end of the electrode lead is withdrawn to the outside.

The battery case comprises an accommodation part accommodating the electrode assembly and a sealing part formed along an edge surface of the accommodation part to seal the accommodation part. A device for forming the battery case comprises a die on which a battery film is disposed, a stripper fixing the battery film disposed on the die, and a punch pressing a surface of the battery film disposed on the die to form the electrode assembly accommodation part in the battery film.

However, in the above-described device for forming the battery case, when the battery film is formed, cracks may occur at a local portion, i.e., a vertex portion of the accommodation part.

### [Prior Art Document]

### [Patent Document]

Korean Patent Publication No. 10-2008-0081845 International Patent Application Publication No. 2016/006403

### SUMMARY OF THE INVENTION

An aspect of the present invention provides a pouch forming device and method, in which, when a pouch film is pressed to form an accommodation part accommodating an electrode assembly, a stripper fixing the pouch film gradually decreases in pressing force, and thus, the pouch film gradually increases in elongation to stably form the accommodation part and also prevent cracks from occurring at a local portion, i.e., a vertex portion of the accommodation part, and a facility for producing a secondary battery, which comprises the pouch forming device.

According to an aspect of the present invention, there is provided a pouch forming device comprising: a die member provided with a die having a top surface on which a pouch film is disposable, a forming part (111a) formed in the top surface, and a die holder to which the die is fixed; a stripper member provided with a stripper that is vertically movably disposed on an upper portion of the die member and a first driving piece allowing the stripper to vertically move, said stripper being adapted to press and fix apouch film disposed on the die when descending in operations; a punch member provided with a punch plate comprising a punch that is vertically movable disposed on the upper portion of the die member and a second driving piece allowing the punch plate to vertically move, said punch being adapted to be inserted into the forming part when descending; and a control member controlling, in operation:
- the first driving piece to allow the stripper to ascend when the punch is inserted into the forming part, and/or
- the second driving piece to reduce a descending speed of the punch plate on which the punch is disposed when the punch is inserted into the forming part.

The control member may control the first driving piece to allow the stripper to gradually ascend.

The control member may allow the stripper to ascend when the punch is completely inserted into the forming part.

The control member comprises a detection sensor detecting insertion of the punch into the forming part and a controller controlling the driving piece according to a signal from the detection sensor to allow the stripper to gradually ascend.

The first driving piece may comprise a plurality of moving rods connected to the stripper by passing through a top surface of the punch plate to allow the stripper to vertically move, a connection bar to which the plurality of moving rods disposed on an upper portion of the punch plate are fixed and which allows the plurality of moving rods to vertically move at the same time, and a cylinder allowing the connection bar to vertically move.

The control member may control the second driving piece to gradually reduce the descending speed of the punch plate on which the punch is disposed.

The control member may control the first driving piece and the second driving piece at the same time to allow the stripper to gradually ascend and gradually reduce the descending speed of the punch plate.

According to another aspect of the present invention, there is provided a pouch forming method comprising; a disposition step of disposing a pouch film on a top surface of a die member provided with a forming part; a pressing step of pressing the pouch film disposed on the top surface of the die member through a stripper member so that an edge surface of the pouch film is fixed; a forming step of inserting a punch into the forming part to form an electrode assembly accommodation part in a surface of the pouch film; and a control step of gradually reducing pressing force of the stripper member to gradually decrease in pressing force applied to the pouch film when the punch is inserted into the forming part to press the pouch film.

The control step comprises a first control process of outputting an insertion signal when the punch is inserted into the forming part and a second control process of gradually reducing the pressing force applied to the pouch film when the insertion signal is outputted.

The control step may further comprise a third control process of gradually reducing a descending speed of the punch when the insertion signal is outputted to gradually decrease in pressing force applied to the pouch film through the punch.

According to another aspect of the present invention, there is provided a facility for producing a secondary battery, the facility comprising a pouch forming device as disclosed above.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic side view of a pouch forming device according to the present invention;
FIG. 2 is an exploded perspective view of the pouch forming device according to the present invention;
FIG. 3 is an assembled perspective view of the pouch forming device according to the present invention;
FIG. 4 is a front view of the pouch forming device according to the present invention;
FIG. 5 is a side view of the pouch forming device according to the present invention;
FIG. 6 is a cross-sectional view taken along line A-A of FIG. 3;
FIG. 7 is a flowchart illustrating a pouch forming method according to the present invention;
FIG. 8 is a graph illustrating a relationship between pressing force and a forming depth of a stripper member in the pouch forming method according to the present invention;
FIG. 9 is a graph illustrating a relationship between a descending speed and a forming depth of a punch member in the pouch forming method according to the present invention;
FIG. 10 is a view illustrating a sealing device of a facility for producing a secondary battery according to the present invention;
FIG. 11 is a table showing an experimental example of the pouch forming device according to the present invention;
FIG. 12 is a perspective view of a pouch manufactured according to a comparative example in the experimental example of the pouch forming device according to the present invention; and
FIG. 13 is a perspective view of a pouch manufactured according to a manufacturing example in the experimental example of the pouch forming device according to the present invention.

### DETAILED DESCRIPTION OF THE PREFERRED EMBODIMENT

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

In the present disclosure, the words "up", "upper", "top", "lower", and "bottom" are used to describe components of the devices according to the invention and as such are to be considered with reference to the devices in their operating position.

Further, in the present disclosure, the word "vertically" relates to the upper-lower axis.

### [Pouch]

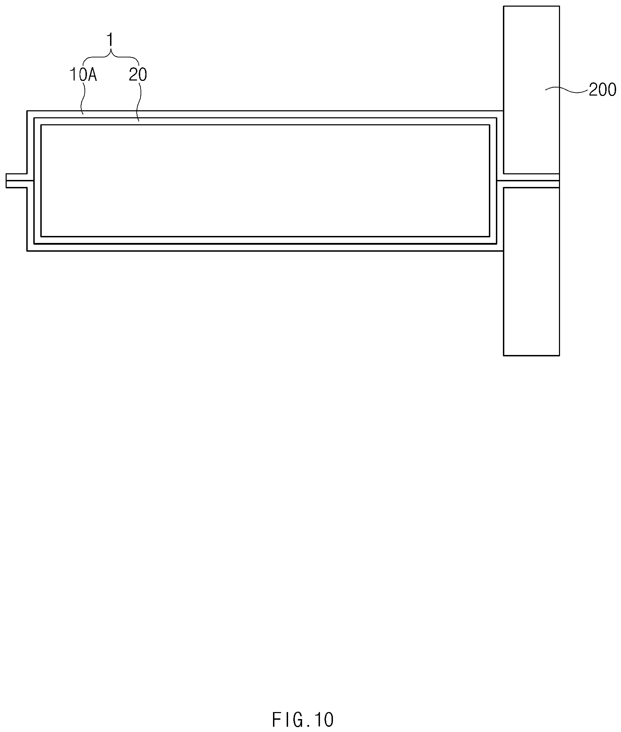

Referring to FIGS. 10, 12, and 13, a pouch 10A is configured to accommodate an electrode assembly and comprises an electrode assembly accommodation part 11 accommodating the electrode assembly 20 and a sealing part 12 sealing the electrode assembly accommodation part 11.

The pouch 10A having the above-described structure is formed by using a pouch forming device according to the present invention. That is, the pouch forming device according to the present invention presses one surface of a pouch film having a predetermined area to form the electrode assembly accommodation part 11 and bends the other surface of the pouch film to overlap the electrode assembly accommodation part, thereby manufacturing the pouch 10A.

Here, in the pouch forming device according to the present invention, when the pouch film is pressed to form the electrode assembly accommodation part, the pressing force for fixing the pouch film may gradually decrease. Thus, when the electrode assembly accommodation part is formed, elongation may gradually increase to form the electrode assembly accommodation part without an occurrence of cracks at a local portion, i.e., an edge or vertex portion of the electrode assembly accommodation part.

Hereinafter, the pouch forming device according to the present invention will be described in detail with reference to the accompanying drawings.

### [Pouch forming device according to the present invention]

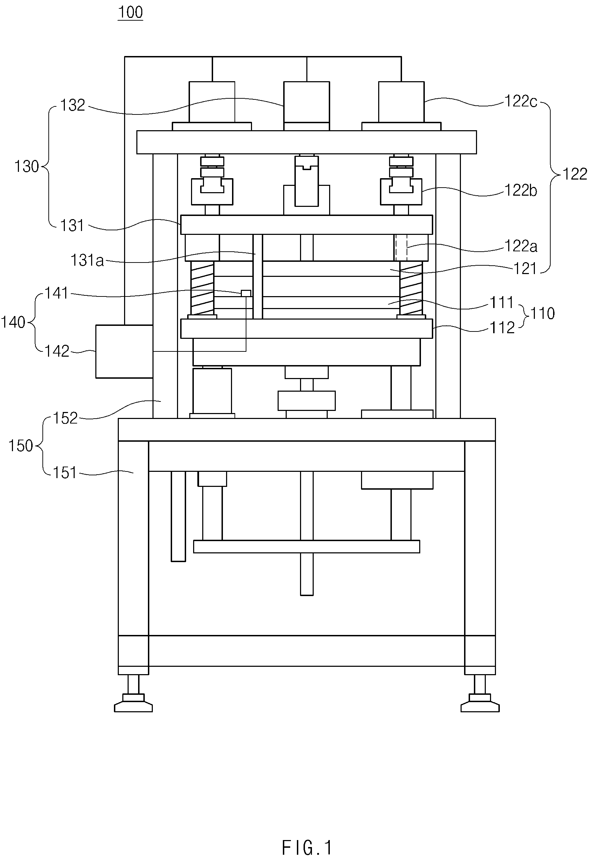

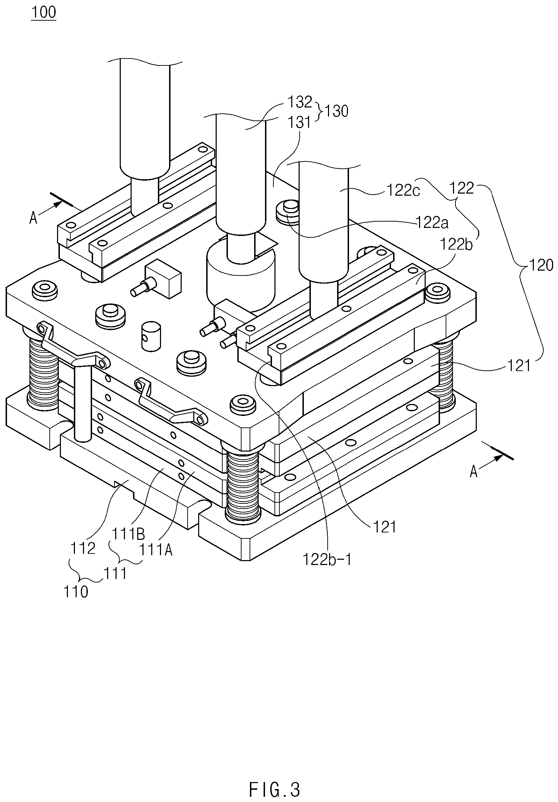

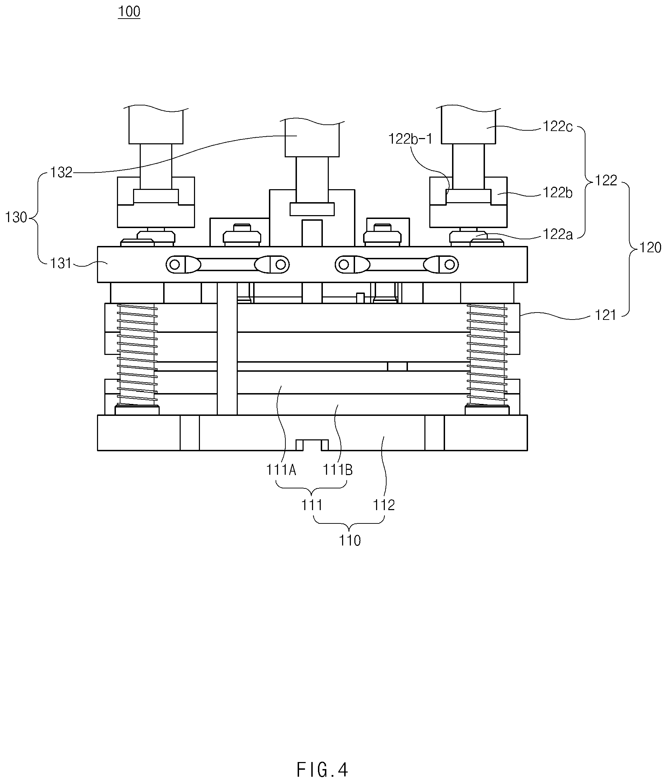

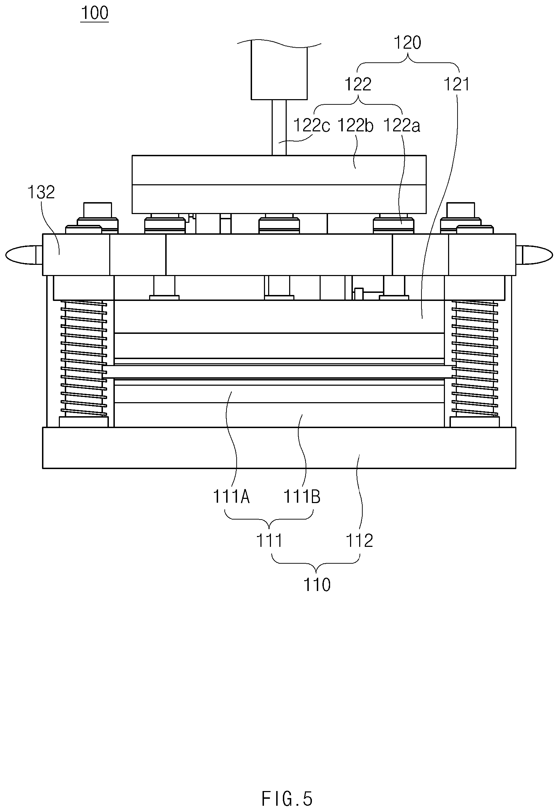

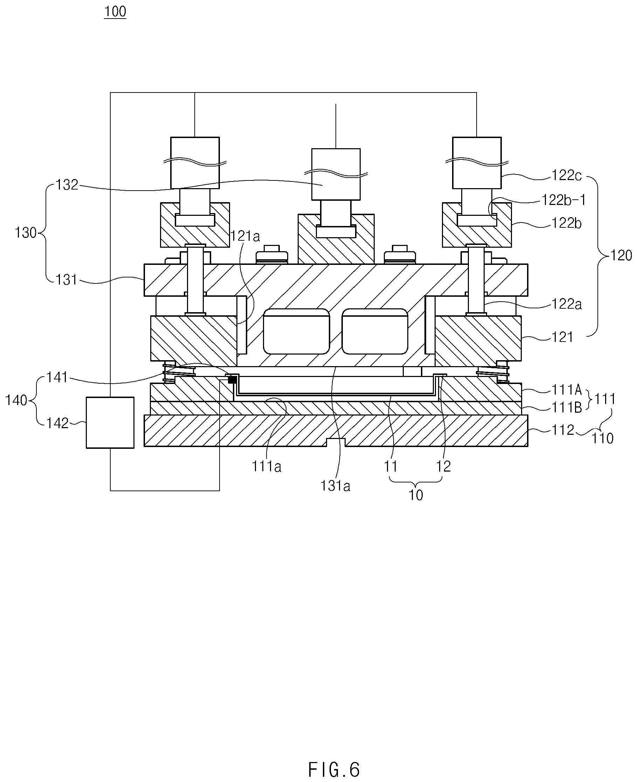

As illustrated in FIGS. 1 to 6, a pouch forming device 100 according to the present invention comprises a die member 110 on which a pouch film 10 is disposed, a stripper member 120 pressing the pouch film 10 disposed on the die member 110 to fix the pouch film 10, a punch member 130 pressing the pouch film 10 disposed on the die member 110 to form an electrode assembly accommodation part, and a control member 140 reducing pressing force of the stripper member 120 when the punch member 130 presses the pouch film 10 to increase in elongation of the pouch film 10.

### Die member

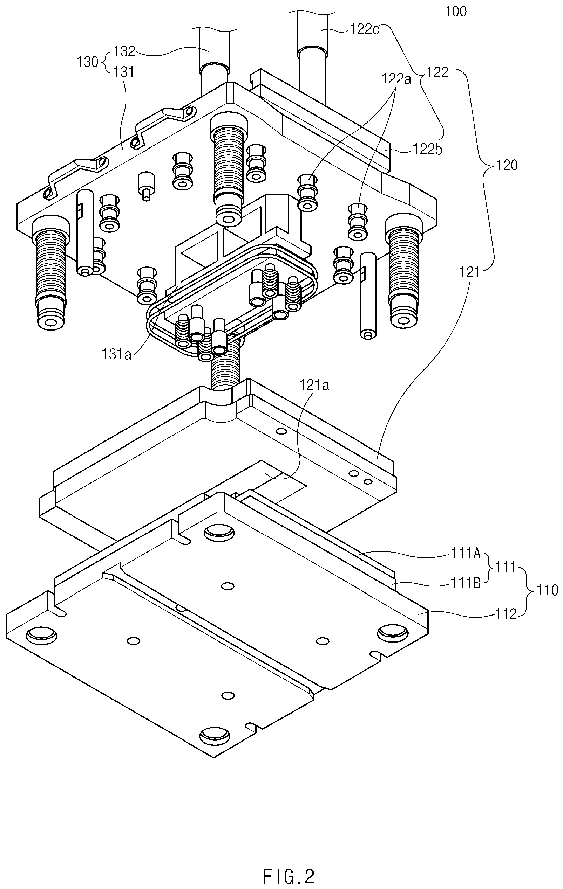

As illustrated in FIG. 2, the die member 110 is configured to dispose the pouch film 10 thereon. The die member 110 comprises a die 111 on which the pouch film 10 is disposed and a die holder 112 to which the die 111 is fixed.

Here, the die 111 has an area less than that of the die holder 112. A forming part 111a for forming the electrode assembly accommodation part in the pouch film 10 is formed in a top surface of the die 111.

The die 111 comprises an upper die 111A and a lower die 111B, which are vertically stacked. The upper die 111A is provided with the forming part 111a, which vertically passes through the upper die 111A, in a top surface thereof, and the lower die 111B is disposed on the upper die 111A to finish a lower portion of the forming part 111a. In the die 111 having the above-described structure, the plurality of upper dies 111A, in which the forming parts having various sizes, shapes, and thicknesses are formed, may be replaced from the lower die 111B to enhance compatibility.

### Stripper member

The stripper member 120 is configured to fix the pouch film disposed on the die member. The stripper member 120 comprises a stripper 121 vertically movably disposed on an upper portion of the die member 110 and pressing the pouch film 10 to fix the pouch film 10 disposed on the die 111 when descending and a first driving piece 122 allowing the stripper 121 to vertically move.

The stripper 121 has a size corresponding to that of the top surface of the die 111. A through-hole 121a vertically passing through the stripper 121 and having the same size as the forming part 111a is formed in a top surface of the stripper 121.

The first driving piece 122 comprises a plurality of moving rods 122a allowing the stripper 121 to vertically move, a connection bar 122b allowing the plurality of moving rods to vertically move at the same time, and a cylinder 122c allowing the connection bar 122b to vertically move.

Here, the plurality of moving rods 122a are uniformly connected to along an edge of the top surface of the stripper 121 so that the stripper 121 vertically descends or ascends with respect to the die 110. Particularly, the plurality of moving rods 122a pass through a top surface of a punch plate of the punch member 130 and are connected to the stripper 121. Thus, the moving rods 122a vertically move by the punch plate to allow the stripper 121 to stably vertically descend or ascend.

The connection bar 122b is configured to allow the plurality of moving rods to move at the same time. The connection bar 122b has a long rectangular shape, and the plurality of moving rods 122a are connected to a bottom surface of the connection bar 122b.

Here, a guide groove 122b-1 is formed in a top surface of the connection bar 122b in a longitudinal direction, and the cylinder 122c is positionally adjustably connected to the guide groove 122b-1. That is, even though a connection error between the cylinder 122c and the connection bar 122b occurs, the cylinder 122c may be stably connected to the connection bar 122b.

In the stripper member 120 having the above-described structure, when the connection bar 122b descends through the cylinder 122c, the stripper member 120 may be interlocked with the connection bar 122b to allow the plurality of moving rods 122a to descend. Thus, while the stripper 121 descends by the plurality of moving rods 122a, the stripper 121 may press and fix the edge surface of the pouch film 10 disposed on the die 111 at the same time.

### Punch member

The punch member 130 comprises a punch plate 131 comprising a punch 131a that is vertically movably disposed on the upper portion of the die member 110 and inserted into the forming part 111a when descending to form the electrode assembly accommodation part and a second driving piece 132 allowing the punch plate 131 to vertically move.

In the punch member 130 having the above-described structure, when the punch plate 131 descends by the second driving piece 132, the punch 131a provided on the punch plate 131 may pass through the through-hole of the stripper 121 and then be inserted into the forming part 111a. Here, the punch 131a may be inserted into the forming part 111a in the state of pressing the pouch film 10 disposed on the forming part 111a to form the electrode assembly accommodation part having the form of the forming part in the pouch film 10.

### Control member

The control member 140 may control the first driving piece to allow the stripper to ascend so as to decrease in pressing force applied to the pouch film when the punch is inserted into the forming part to press the pouch film.

That is, the control member 140 may reduce the pressing force applied to the edge surface of the pouch film 10 to induce the pouch film 10 so that a portion of the edge surface of the pouch film 10 together with the punch 131a is inserted into the forming part 111a. Thus, the electrode assembly accommodation part 11 to be formed in the pouch film 10 may increase in elongation, and therefore, the electrode assembly accommodation part 11 may be formed without the occurrence of the cracks.

According to the invention, the control member 140 comprises a detection sensor 141 detecting the insertion of the punch 131a into the forming part 111a and a controller 142 controlling the first driving piece 122 according to a signal of the detection sensor 141 to allow the stripper 121 to gradually ascend so as to gradually decrease in pressing force applied to the pouch film 10 disposed on the die 111.

That is, in the control member 140, when the punch 131a is inserted into the forming part 111a, the detection sensor 141 detects the insertion of the punch 131a to transmit a signal to the controller 142, and the controller 142 allows the first driving piece 122 to gradually ascend according to the signal transmitted from the detection sensor 141. Then, while the stripper 121 gradually ascends by being interlocked with the first driving piece 122, the pressing force applied to the pouch film 10 disposed on the die 111 may gradually decrease. As a result, a portion of the edge surface of the pouch film 10 pressed by the stripper 121 moves by the pressing force of the punch 131a in the direction of the forming part 111a to significantly enhance the elongation. Thus, the electrode assembly accommodation part 11 may be stably formed in the pouch film 10 without the occurrence of the cracks.

That is to say, as the pressing force of the punch 131a pressing the pouch film 10 largely increases, the pressing force of the stripper 121 fixing the pouch film 10 largely decreases. Accordingly, the elongation of the electrode assembly accommodation part of the pouch film 10 may significantly increase to prevent the cracks from occurring when the electrode assembly accommodation part is formed in the pouch film.

Here, the control member 140 may gradually reduce the pressing force of the stripper 121. Thus, a quality problem caused by excessive movement of the edge surface of the pouch film 10 or a quality problem caused by small moving force may be solved. That is, the edge surface of the pouch film may uniformly move and be uniformly elongated to improve quality of the electrode assembly accommodation part.

The control member 140 may allow the stripper 121 to ascend so as to be separated from the pouch film 10 when the punch 131a is completely inserted into the forming part 111a so that the pressing force applied to the pouch film 10 is completely removed. Thus, the elongation of the edge and vertex portion of the electrode assembly accommodation part formed in the pouch film may be maximized to prevent the cracks from occurring. Particularly, since the stripper 121 is separated from the pouch film 10, a separate process for the ascending of the stripper 121 may be removed to achieve process simplification.

When the punch 131a is inserted into the forming part 111a to press the pouch film 10, the control member 140 further controls the second driving piece 132 to reduce a descending speed of the punch plate 131 on which the punch 131a is disposed. Particularly, the control member 140 may control the second driving piece 132 to gradually reduce the descending speed of the punch plate 131 on which the punch 131a is disposed. Thus, the pressing force applied to the pouch film 10 through the punch 131a may gradually decrease, and thus, the pouch film 10 may be gradually elongated so that the electrode assembly accommodation part to be formed in the pouch film is stably formed without the occurrence of the cracks.

Particularly, since the punch 131a is inserted into the forming part 111a, the control member 140 may control the first driving piece 122 and the second driving piece 132 at the same time so that the stripper gradually ascends, and simultaneously, the descending speed of the punch plate gradually decreases. Thus, the pouch film may be gradually elongated to stably form the electrode assembly accommodation part to be formed in the pouch film may be stably formed without the occurrence of the cracks.

Thus, in the pouch forming device 100 of the present invention, when the punch is inserted into the forming part, the stripper 121 may gradually ascend. As a result, the pressing force applied to the pouch film 10 fixed by the stripper may gradually decrease to gradually increase in elongation of the pouch film 10. Therefore, the electrode assembly accommodation part to be formed in the pouch film may be stably formed without the occurrence of the cracks.

Referring to FIG. 1, the pouch forming device 100 according to the present invention further comprises a body member 150. The body member 150 comprises a lower body 151 and an upper body 152 which is disposed on the lower body 151 and on which the die member 110, the stripper member 120, the punch member 130, and the control member 140 are installed. That is, the pouch forming device 100 according to the present invention may stably install the die member 110, the stripper member 120, the punch member 130, and the control member 140 through the body member 150.

Hereinafter, a forming method using the pouch forming device 100 according to the present invention will be described.

### [Pouch forming method according to the present invention]

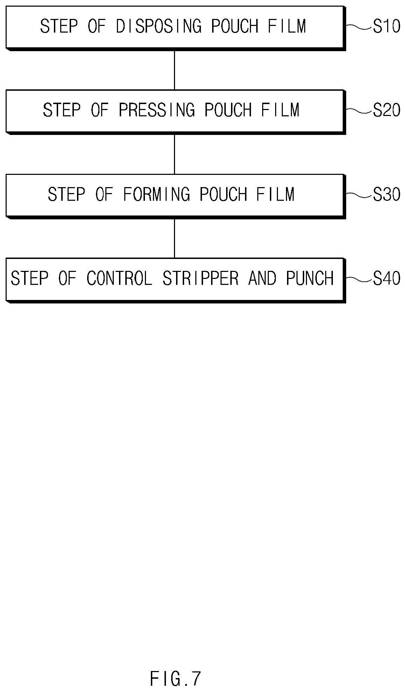

As illustrated in FIG. 7, a pouch forming method according to the present invention comprises a disposition step (S10) of disposing a pouch film 10 on a top surface of a die member 110 provided with a forming part, a pressing step (S20) of pressing the pouch film 10 disposed on the top surface of the die member 110 through a stripper member 120 so that an edge surface of the pouch film 10 is fixed, a forming step (S30) of inserting a punch into the forming part to form an electrode assembly accommodation part in a surface of the pouch film 10, and a control step (S40) of gradually reducing pressing force of the stripper member 120 to gradually decrease in pressing force applied to the pouch film when the punch is inserted into the forming part to press the pouch film.

In the disposition step (S10), the pouch film 10 is disposed on the top surface of the die member 110. That is, the die member 110 comprises a die 111 in which the forming part 111a is formed and a die holder 112 fixing the die 111. The pouch film 10 is disposed on the top surface of the die 111 in which the forming part 111a is formed.

In the pressing step (S20), the stripper member 120 presses and fixes the pouch film disposed on the die 111. That is, the stripper member 120 comprises a stripper 121 and a first driving piece 122. While the stripper 121 descends by the first driving piece 122, the stripper 121 presses and fixes an edge surface of the pouch film 10 disposed on the die 111.

In the punch step (S30), the punch member 130 presses the pouch film 10 disposed on the forming part 111a to form the electrode assembly accommodation part. Here, the punch member 130 comprises a punch plate 131 provided with the punch 131a and a second driving piece. That is, in the punch member 130, when the punch plate 131 descends by the second driving piece 132, the punch 131a provided on the punch plate 131 is inserted into the forming part 111a in a state of pressing the pouch film 10 to form the electrode assembly accommodation part in the pouch film 10.

The control step (S40) comprises a first control process of outputting an insertion signal when the punch 131a is inserted into the forming part and a second control process of gradually reducing pressing force applied to the pouch film when the insertion signal is outputted. Here, the control member 140 comprises a detection sensor 141 and a controller 142.

That is, in the first control process, when the punch 131a is inserted into the forming part 111a in the state of pressing the pouch film 10, the detection sensor 141 detects the insertion of the punch 131a to transmit the insertion signal to the controller 142. In the second control process, when the controller 142 receives the insertion signal of the detection sensor 141, the first driving piece 122 is controlled to allow the stripper 121 to gradually ascend. Thus, the pressing applied to the pouch film 10 fixed to the stripper 121 gradually decreases, and a portion of the edge surface of the pouch film 10 is gradually elongated in a direction of the forming part by the pressing force of the punch 131a to enhance elongation. Therefore, the electrode assembly to be formed in the pouch film 10 may be stably formed without an occurrence of cracks.

Particularly, when the punch 131a is completely inserted into the forming part, the control member 140 completely removes the pressing force applied to the pouch film 10 through the stripper 121. Thus, the elongation of the pouch film while the punch 131a is completely inserted into the forming part may be maximized to prevent the cracks from occurring at an edge and a vertex of the electrode assembly accommodation part formed in the pouch film 10.

The control step (S40) further comprises a third control process of gradually reducing a descending speed of the punch when the insertion signal is outputted through the control member 140 to gradually decrease in pressing force applied to the pouch film through the punch.

In the third control process, the second driving piece 132 may be controlled through the controller 142 to gradually decrease in descending speed of the punch plate 131. Thus, the punch 131a together with the punch plate 131 may gradually decrease in descending speed to gradually decrease in pressing force applied to the pouch film 10 disposed on the forming part. As a result, the pouch film 10 may be gradually formed to form the electrode assembly accommodation part 11 without the occurrence of the cracks.

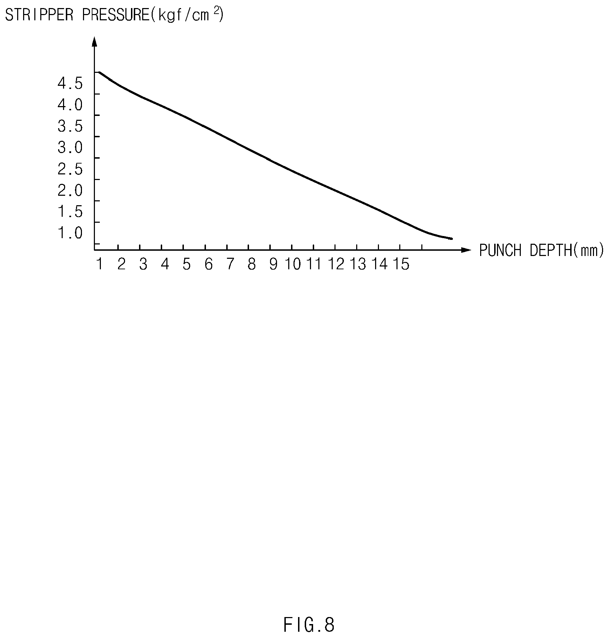

In summary, as shown in the graph of FIG. 8, in the second control process, the pressing force of the stripper 121 and a depth at which the punch 131a is inserted into the forming part 111a are inversely proportional to each other. That is, as the depth of the punch 131a inserted into the forming part 111a increases, the pressing force of the stripper 121 may gradually decrease to expand an elongation area of the pouch film. As a result, a local elongation of the pouch may increase to prevent the cracks from occurring.

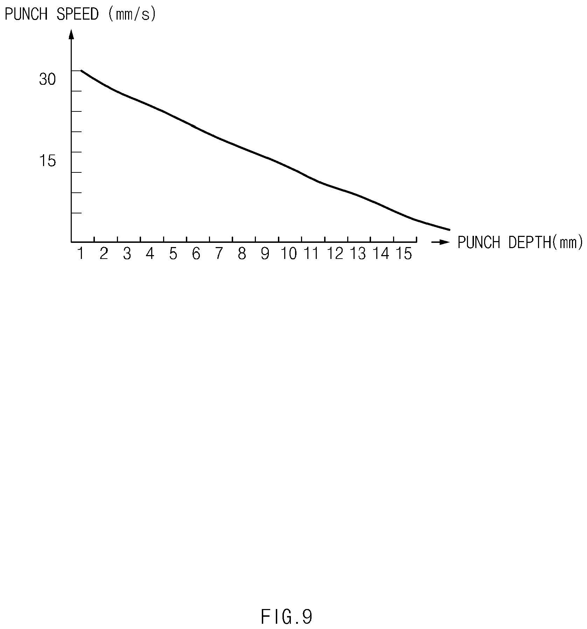

Also, as illustrated in FIG. 9, in the third control process, the descending speed of the punch 131a and the depth of the punch 131a inserted into the forming part 111a are inversely proportional to each other. That is, as the depth of the punch 131a inserted into the forming part 111a increases, the descending speed, i.e., the pressing force of the punch 131a may gradually decrease to expand the elongation area of the pouch film. As a result, a local elongation of the pouch may increase to prevent the cracks from occurring.

Thus, in the pouch forming method according to the first embodiment of the present invention, when the pouch film is formed, the elongation may gradually increase to form the electrode assembly accommodation part in the pouch film without the occurrence of the cracks, thereby manufacturing the pouch having high quality.

### [Facility for producing secondary battery according to the present invention]

A facility for producing a secondary battery according to the present invention comprises the pouch forming device as disclosed above.

That is, referring to FIGS. 1 and 10, the facility for producing secondary battery according to the present invention comprises a pouch forming device forming a pouch 10A and a sealing device 200 sealing an edge surface of the pouch 10A in a state of accommodating an electrode assembly 20 in the pouch 10A to produce a secondary battery 1.

Here, the pouch forming device 100 comprises a die member on which a pouch film is disposed, a stripper member pressing and fixing the pouch film disposed on the die member, a punch member forming the pouch film disposed on the die member to form an electrode assembly accommodation part, and a control member reducing pressing force of the stripper member when the punch member perform the forming to increase in tensile force of the pouch film and to prevent cracks from occurring.

The pouch forming device 100 has the same configuration and function as the pouch forming device as disclosed above, and thus, its detailed description will be omitted.

Thus, the facility for producing the secondary battery according to the second embodiment of the present invention may produce the secondary battery having high quality.

### [Pouch forming device according to third embodiment of the present invention]

A pouch forming device according to a third embodiment of the present invention comprises a die member on which a pouch film is disposed, a stripper member pressing and fixing the pouch film disposed on the die member, and a punch member forming the pouch film disposed on the die member to form an electrode assembly accommodation part. The punch member comprises a punch plate comprising a punch that is vertically movably disposed on an upper portion of the die member and is inserted into the forming part when descending to form the electrode assembly accommodation part in the pouch film and a second driving piece allowing the punch plate to vertically move.

Here, the pouch forming device according to the third embodiment of the present invention further comprises a control member controlling the second driving piece to reduce a descending speed of the punch plate provided with the punch when the punch is inserted into the forming part to press the pouch film. Thus, the descending speed of the punch may be adjusted to gradually decrease in pressing force applied to the pouch film. Therefore, the pouch film may be gradually elongated to prevent cracks from occurring.

### [Experimental Example]

### Comparative Example

In Comparative Example, an electrode assembly accommodation is formed in a pouch film by using a pouch forming device comprising a die member, a stripper member, and a punch member. That is, the pouch film is formed by using the constituents except for the control member in the pouch forming device according to the the present invention except for the control member.

### Manufacturing Example

In Manufacturing Example, an electrode assembly accommodation is formed in a pouch film by using a pouch forming device comprising a die member, a stripper member, a punch member, and a control member. That is, the pouch film is formed by using all the constituents of the pouch forming device according to the the present invention.

Here, in Comparative Example and Manufacturing Example, the same pouch film is used, and the pouch film is formed under the same environment. Here, the same environment has following conditions: a degree of vacuum: -98kPa, a pressure of the stripper member: 4kg/cm², an initial descending speed of the punch member: 30 mm/s, a pressure inverse proportion control rate: 95%, and a surface roughness of the punch: 0.1 s.

### Elongation

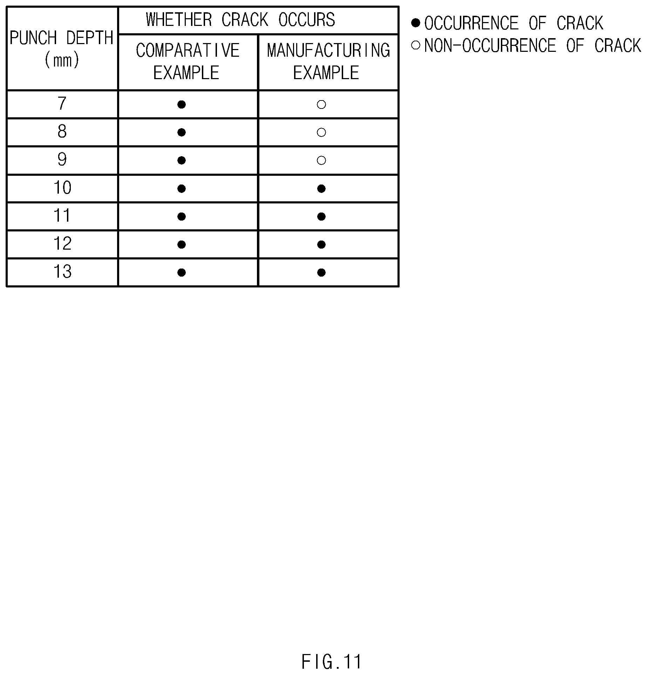

As results obtained by measuring whether the pouch film formed through Comparative Example and Manufacturing Example is defective, a result table as illustrated in FIG. 11 may be obtained.

Referring to the result table of FIG. 11, in Comparative Example, it is seen that the cracks occur in the pouch film from a point at which the punch descends by 7 mm from the uppermost end of the forming part of the die. Also, in Manufacturing Example, it is seen that the cracks occur in the pouch film from a point at which the punch descends by 10 mm from the uppermost end of the forming part of the die.

In summary, in Manufacturing Example, the cracks occurs after further descending by 3 mm when compared to Comparative Example. As the results of the above experiments, in Manufacturing Example, it is confirmed that the elongation increases when compared to Comparative Example.

### Crack occurrence photograph

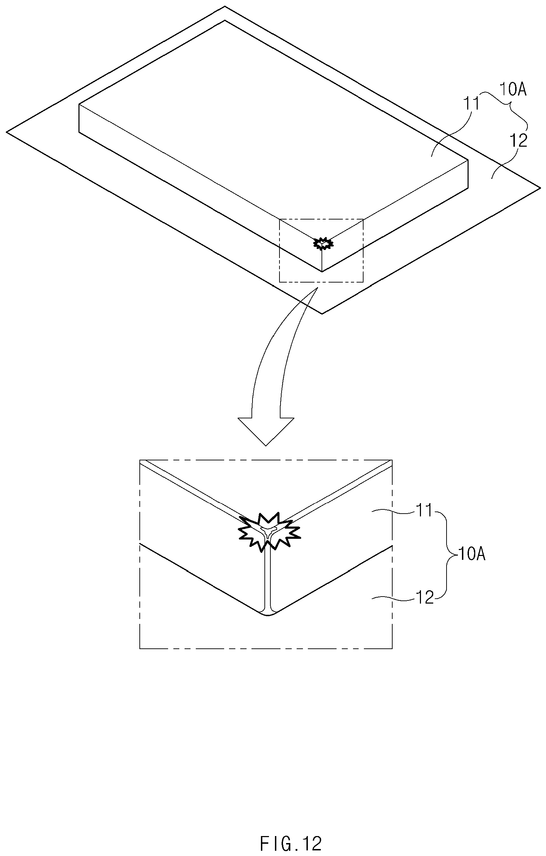

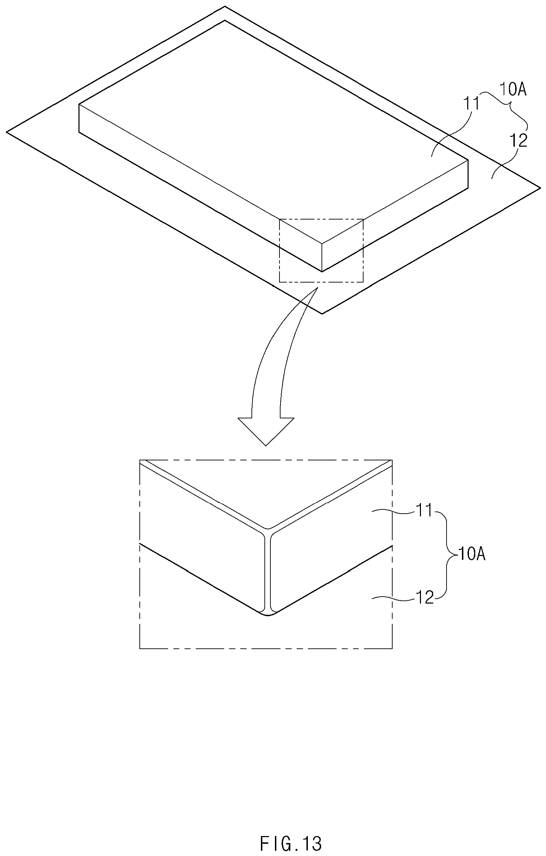

In Comparative Example and Manufacturing Example, FIGS. 12 and 13 shows a photograph of the pouch formed in the state in which the punch descends by 7 mm from the uppermost end of the forming part of the die.

As illustrated in FIG. 12, the pouch 10A manufactured by Comparative Example comprises the electrode assembly accommodation part 11 and the sealing part 12. Here, it is confirmed that the cracks occur in the vertex of the electrode assembly accommodation part 11.

As illustrated in FIG. 13, the pouch 10A manufactured by Manufacturing Example comprises the electrode assembly accommodation part 11 and the sealing part 12. Here, it is confirmed that the electrode assembly accommodation part 11 is formed up to the vertex without the occurrence of the cracks.

Thus, as the results of the above experiments, it is confirmed that the pouch forming device according to Manufacturing Example of the present invention increases in elongation in comparison to that of the pouch forming device according to Comparative Example of the present invention. Therefore, the electrode assembly accommodation part may be formed without the occurrence of the cracks.

According to the present invention, the pouch forming device may comprise the die member, the stripper member, the punch member, and the control member. That is, when the pouch is formed, the stripper may gradually decrease in pressing force, or the punch member may gradually decrease in descending speed. Thus, when the pouch is formed, the elongation may gradually increase, and thus, the pouch may be stably formed. Particularly, when the pouch is formed, the local portion, i.e., the edge or vertex portion of the electrode assembly accommodation part formed in the pouch may be prevented from being cracked.

## Claims

1. A pouch forming device (100) comprising:
a die member (110) provided with a die (111) having a top surface on which a pouch film (10) is disposable , a forming part (111a) formed in the top surface, and a die holder (112) to which the die (111) is fixed;
a stripper member (120) provided with a stripper (121) that is vertically movably disposed on an upper portion of the die member (110) and a first driving piece (122) allowing the stripper (121) to vertically move, said stripper (121) being adapted to press and fix a pouch film (10) disposed on the die (111) when descending in operations;
a punch member (130) provided with a punch plate (131) comprising a punch (131a) that is vertically movable disposed on the upper portion of the die member (110) and a second driving piece (132) allowing the punch plate (131) to vertically move, said punch (131a) being adapted to be inserted into the forming part (111a) when descending ; and
a control member (140) controlling, in operation:
- the first driving piece (122) to allow the stripper (121) to ascend when the punch (131a) is inserted into the forming part (111a), and/or
- the second driving piece (132) to reduce a descending speed of the punch plate (131) on which the punch (131a) is disposed when the punch (131a) is inserted into the forming part (111a),
**characterized in that**
the control member (140) comprises a detection sensor (141) detecting insertion of the punch (131a) into the forming part (111a) and a controller (142) controlling the first driving piece (122) according to a signal from the detection sensor (141) to allow the stripper (121) to gradually ascend.

2. The pouch forming device (100) of claim 1, wherein the control member (140) controls the first driving piece (122) to allow the stripper (121) to gradually ascend.

3. The pouch forming device (100) of claim 1 or 2, wherein the control member (140) allows the stripper (121) to ascend when the punch (131a) is completely inserted into the forming part (111a).

4. The pouch forming device (100) of any one of claims 1 to 3, wherein the first driving piece (122) comprises a plurality of moving rods (122a) connected to the stripper (121) by passing through a top surface of the punch plate (131) to allow the stripper (121) to vertically move, a connection bar (122b) to which the plurality of moving rods (122a) disposed on an upper portion of the punch plate (131) are fixed and which allows the plurality of moving rods (122a) to vertically move at the same time, and a cylinder (122c) allowing the connection bar (122b) to vertically move.

5. The pouch forming device (100) of any one of claims 1 to 4, wherein the control member (140) controls the second driving piece (132) to gradually reduce the descending speed of the punch plate (131) on which the punch (131a) is disposed.

6. The pouch forming device (100) of any one of claims 1 to 5, wherein the control member (140) controls the first driving piece (122) and the second driving piece (132) at the same time to allow the stripper (121) to gradually ascend and gradually reduce the descending speed of the punch plate (131).

7. A pouch forming method comprising;
a disposition step of disposing a pouch film (10) on a top surface of a die member (110) provided with a forming part (111a);
a pressing step of pressing the pouch film (10) disposed on the top surface of the die member (110) through a stripper member (120) so that an edge surface of the pouch film (10) is fixed;
a forming step of inserting a punch (131a) into the forming part (111a) to form an electrode assembly accommodation part in a surface of the pouch film (10); and
a control step of gradually reducing pressing force of the stripper member (120) to gradually decrease in pressing force applied to the pouch film (10) when the punch (131a) is inserted into the forming part (111a) to press the pouch film (10),
wherein the control step comprises a first control process of outputting an insertion signal when the punch (131a) is inserted into the forming part (111a) and a second control process of gradually reducing the pressing force applied to the pouch film (10) when the insertion signal is outputted.

8. The pouch forming method of claim 7, wherein the control step further comprises a third control process of gradually reducing a descending speed of the punch (131a) when the insertion signal is outputted to gradually decrease in pressing force applied to the pouch film (10) through the punch (131a) .

9. A facility for producing a secondary battery, the facility comprising a pouch forming device (100) as defined in any one claims 1 to 6.

## Patentansprüche

1. Beutel-Bildung-Vorrichtung (100), umfassend:
ein Matrizen-Element (110), welches mit einer Matrize (111), welche eine Oberfläche aufweist, an welcher ein Beutel-Film (10) anordenbar ist, einen Bildung-Teil (111a), welcher in der oberen Fläche gebildet ist, und eine Matrizen-Halteeinheit (112) bereitgestellt ist, an welcher die Matrize (111) befestigt ist;
ein Abziehelement (120), welches mit einer Abzieheinheit (121), welche an einem oberen Abschnitt des Matrizen-Elements (110) vertikal bewegbar angeordnet ist, und einem ersten Antrieb-Stück (122) bereitgestellt ist, welches der Abzieheinheit (121) erlaubt, sich vertikal zu bewegen, wobei die Abzieheinheit (121) dazu eingerichtet ist, einen Beutel-Film (10) zu pressen und zu befestigen, welcher an der Matrize (111) angeordnet ist, wenn in Bedienungen absteigend;
ein Stanzelement (130), welches mit einer Stanzplatte (131), welche einen Stempel (131a) umfasst, welcher an dem oberen Abschnitt des Matrizen-Elements (110) vertikal bewegbar angeordnet ist, und ein zweites Antrieb-Stück (132) bereitgestellt ist, welches der Stanzplatte (131) erlaubt, sich vertikal zu bewegen, wobei der Stempel (131a) dazu eingerichtet ist, in den Bildung-Teil (111a) eingesetzt zu sein, wenn absteigend; und
ein Steuerelement (140), welches im Betrieb das Folgende steuert:
- das erste Antrieb-Stück (122), um der Abzieheinheit (121) zu erlauben, aufzusteigen, wenn der Stempel (131a) in den Bildung-Teil (111a) eingesetzt ist, und/oder
- das zweite Antrieb-Stück (132), um eine Abstiegsgeschwindigkeit der Stanzplatte (131) zu reduzieren, an welcher der Stempel (131a) angeordnet ist, wenn der Stempel (131a) in den Bildung-Teil (111a) eingesetzt ist,
**dadurch gekennzeichnet, dass**
das Steuerelement (140) einen Detektion-Sensor (141), welcher ein Einsetzen des Stempels (131a) in den Bildung-Teil (111a) detektiert, und eine Steuereinheit (142) umfasst, welche das erste Antrieb-Stück (122) gemäß einem Signal des Detektion-Sensors (141) steuert, um der Abzieheinheit (121) zu erlauben, allmählich aufzusteigen.

2. Beutel-Bildung-Vorrichtung (100) nach Anspruch 1, wobei das Steuerelement (140) das erste Antrieb-Stück (122) steuert, um der Abzieheinheit (121) zu erlauben, allmählich aufzusteigen.

3. Beutel-Bildung-Vorrichtung (100) nach Anspruch 1 oder 2, wobei das Steuerelement (140) der Abzieheinheit (121) erlaubt, aufzusteigen, wenn der Stempel (131a) vollständig in den Bildung-Teil (111a) eingesetzt ist.

4. Beutel-Bildung-Vorrichtung (100) nach einem der Ansprüche 1 bis 3, wobei das erste Antrieb-Stück (122) eine Mehrzahl von Bewegung-Stäben (122a), welche mit der Abzieheinheit (121) durch Durchtreten durch eine obere Fläche der Stanzplatte (131) verbunden sind, um der Abzieheinheit (121) zu erlauben, sich vertikal zu bewegen, eine Verbindung-Stange (122b), mit welcher die Mehrzahl von Bewegung-Stäben (122a), welche an einem oberen Abschnitt der Stanzplatte (131) angeordnet sind, befestigt sind, und welche der Mehrzahl von Bewegung-Stäben (122a) erlaubt, sich zu der gleichen Zeit vertikal zu bewegen, und einen Zylinder (122c) umfasst, welcher der Verbindung-Stange (122b) erlaubt, sich vertikal zu bewegen.

5. Beutel-Bildung-Vorrichtung (100) nach einem der Ansprüche 1 bis 4, wobei das Steuerelement (140) das zweite Antrieb-Stück (132) steuert, um die Abstiegsgeschwindigkeit der Stanzplatte (131), an welcher der Stempel (131a) angeordnet ist, allmählich zu reduzieren.

6. Beutel-Bildung-Vorrichtung (100) nach einem der Ansprüche 1 bis 5, wobei das Steuerelement (140) das erste Antrieb-Stück (122) und das zweite Antrieb-Stück (132) zu der gleichen Zeit steuert, um der Abzieheinheit (121) zu erlauben, allmählich aufzusteigen und allmählich die Abstiegsgeschwindigkeit der Stanzplatte (131) zu reduzieren.

7. Beutel-Bildung-Verfahren, umfassend:
einen Anordnung-Schritt eines Anordnens eines Beutel-Films (10) an einer oberen Fläche eines Matrizen-Elements (110), welches mit einem Formung-Teil (111a) bereitgestellt ist;
einen Press-Schritt eines Pressens des Beutel-Films (10), welcher an der oberen Fläche des Matrizen-Elements (110) angeordnet ist, durch ein Abziehelement (120), so dass eine Rand-Fläche des Beutel-Films (10) befestigt wird;
einen Bildung-Schritt eines Einsetzens eines Stempels (131a) in den Bildung-Teil (111a), um einen Elektroden-Anordnung-Aufnahme-Teil in einer Fläche des Beutel-Films (10) zu bilden; und
einen Steuer-Schritt eines allmählichen Reduzierens einer Presskraft des Abziehelements (120), um in einer Presskraft, welche auf den Beutel-Film (10) ausgeübt wird, allmählich abzunehmen, wenn der Stempel (131a) in den Bildung-Teil (111a) eingesetzt ist, um den Beutel-Film (10) zu pressen,
wobei der Steuer-Schritt einen ersten Steuer-Prozess eines Ausgebens eines Einsatz-Signals, wenn der Stempel (131a) in den Bildung-Teil (111a) eingesetzt wird, und einen zweiten Steuer-Prozess eines allmählichen Reduzierens der Presskraft, welche auf den Beutel-Film (10) ausgeübt wird, umfasst, wenn das Einsatz-Signal ausgegeben wird.

8. Beutel-Bildung-Verfahren nach Anspruch 7, wobei der Steuer-Schritt ferner einen dritten Steuer-Prozess eines allmählichen Reduzierens einer Abstiegsgeschwindigkeit des Stempels (131a) umfasst, wenn das Einsatz-Signal ausgegeben wird, um in einer Presskraft allmählich abzunehmen, welche auf den Beutel-Film (10) durch den Stempel (131a) ausgeübt wird.

9. Einrichtung zum Herstellen einer Sekundärbatterie, wobei die Einrichtung eine Beutel-Bildung-Vorrichtung (100) umfasst, wie in einem der Ansprüche 1 bis 6 definiert.

## Revendications

1. Dispositif de formation de poche (100) comprenant :
un élément à matrice (110) pourvu d'une matrice (111) ayant une surface supérieure sur laquelle un film de poche (10) peut être disposé, d'une partie de formation (111a) formée dans la surface supérieure, et d'un porte-matrice (112) auquel la matrice (111) est fixée ;
un élément à dévêtisseur (120) pourvu d'un dévêtisseur (121) qui est disposé de manière verticalement mobile sur une portion supérieure de l'élément à matrice (110) et d'une première pièce d'entraînement (122) permettant au dévêtisseur (121) de se déplacer verticalement, ledit dévêtisseur (121) étant adapté pour presser et fixer un film de poche (10) disposé sur la matrice (111) lors de la descente dans des opérations ;
un élément à poinçon (130) pourvu d'une plaque porte-poinçon (131) comprenant un poinçon (131a) qui est disposé verticalement mobile sur la portion supérieure de l'élément à matrice (110) et d'une seconde pièce d'entraînement (132) permettant à la plaque porte-poinçon (131) de se déplacer verticalement, ledit poinçon (131a) étant adapté pour être inséré dans la partie de formation (111a) lors de la descente ; et
un élément de commande (140) commandant, dans une opération :
- la première pièce d'entraînement (122) pour permettre au dévêtisseur (121) de monter lorsque le poinçon (131a) est inséré dans la partie de formation (111a), et/ou
- la seconde pièce d'entraînement (132) pour réduire une vitesse de descente de la plaque porte-poinçon (131) sur laquelle le poinçon (131a) est disposé lorsque le poinçon (131a) est inséré dans la partie de formation (111a),
**caractérisé en ce que**
l'élément de commande (140) comprend un capteur de détection (141) détectant l'insertion du poinçon (131a) dans la partie de formation (111a) et un dispositif de commande (142) commandant la première pièce d'entraînement (122) selon un signal du capteur de détection (141) pour permettre au dévêtisseur (121) de monter progressivement.

2. Dispositif de formation de poche (100) selon la revendication 1, dans lequel l'élément de commande (140) commande la première pièce d'entraînement (122) pour permettre au dévêtisseur (121) de monter progressivement.

3. Dispositif de formation de poche (100) selon la revendication 1 ou 2, dans lequel l'élément de commande (140) permet au dévêtisseur (121) de monter lorsque le poinçon (131a) est complètement inséré dans la partie de formation (111a).

4. Dispositif de formation de poche (100) selon l'une quelconque des revendications 1 à 3, dans lequel la première pièce d'entraînement (122) comprend une pluralité de tiges de déplacement (122a) reliées au dévêtisseur (121) en passant à travers une surface supérieure de la plaque porte-poinçon (131) pour permettre au dévêtisseur (121) de se déplacer verticalement, une barre de liaison (122b) à laquelle la pluralité de tiges de déplacement (122a) disposées sur une portion supérieure de la plaque porte-poinçon (131) sont fixées et qui permet à la pluralité de tiges de déplacement (122a) de se déplacer verticalement en même temps, et un cylindre (122c) permettant à la barre de liaison (122b) de se déplacer verticalement.

5. Dispositif de formation de poche (100) selon l'une quelconque des revendications 1 à 4, dans lequel l'élément de commande (140) commande la seconde pièce d'entraînement (132) pour réduire progressivement la vitesse de descente de la plaque porte-poinçon (131) sur laquelle le poinçon (131a) est disposé.

6. Dispositif de formation de poche (100) selon l'une quelconque des revendications 1 à 5, dans lequel l'élément de commande (140) commande la première pièce d'entraînement (122) et la seconde pièce d'entraînement (132) en même temps pour permettre au dévêtisseur (121) de monter progressivement et réduire progressivement la vitesse de descente de la plaque porte-poinçon (131).

7. Procédé de formation de poche comprenant :
une étape de disposition consistant à disposer un film de poche (10) sur une surface supérieure d'un élément à matrice (110) pourvu d'une partie de formation (111a) ;
une étape de pressage consistant à presser le film de poche (10) disposé sur la surface supérieure de l'élément à matrice (110) à travers un élément à dévêtisseur (120) de façon à ce qu'une surface de bord du film de poche (10) soit fixée ;
une étape de formation consistant à insérer un poinçon (131a) dans la partie de formation (111a) pour former une partie de réception d'ensemble électrode dans une surface du film de poche (10) ; et
une étape de commande consistant à réduire progressivement une force de pressage de l'élément à dévêtisseur (120) pour diminuer progressivement une force de pressage appliquée sur le film de poche (10) lorsque le poinçon (131a) est inséré dans la partie de formation (111a) pour presser le film de poche (10),
dans lequel l'étape de commande comprend un premier processus de commande consistant à émettre un signal d'insertion lorsque le poinçon (131a) est inséré dans la partie de formation (111a) et un deuxième processus de commande consistant à réduire progressivement la force de pressage appliquée sur le film de poche (10) lorsque le signal d'insertion est émis.

8. Procédé de formation de poche selon la revendication 7, dans lequel l'étape de commande comprend en outre un troisième processus de commande consistant à réduire progressivement une vitesse de descente du poinçon (131a) lorsque le signal d'insertion est émis pour diminuer progressivement une force de pressage appliquée sur le film de poche (10) à travers le poinçon (131a).

9. Installation permettant de produire une batterie secondaire, l'installation comprenant un dispositif de formation de poche (100) tel que défini dans l'une quelconque des revendications 1 à 6.
